Europäisches Patentamt

European Patent Office

Office européen des brevets

(19)

(11) Veröffentlichungsnummer: **0 255 459 B1**

(12) **EUROPÄISCHE PATENTSCHRIFT**

(45) Veröffentlichungstag der Patentschrift: **24.04.91**

(51) Int. Cl.⁵: **A01D 34/82**, A01D 34/66, A01D 34/70

(21) Anmeldenummer: **87440046.8**

(22) Anmeldetag: **23.07.87**

Die Akte enthält technische Angaben, die nach dem Eingang der Anmeldung eingereicht wurden und die nicht in dieser Patentschrift enthalten sind.

(54) **Rasenmähergehäuse mit gegenläufigen, synchronisierten Messern.**

(30) Priorität: **25.07.86 FR 8611159**

(43) Veröffentlichungstag der Anmeldung:
**03.02.88 Patentblatt 88/05**

(45) Bekanntmachung des Hinweises auf die Patenterteilung:
**24.04.91 Patentblatt 91/17**

(84) Benannte Vertragsstaaten:
**AT BE CH DE ES GB IT LI LU NL SE**

(56) Entgegenhaltungen:
**US-A- 2 071 872**
**US-A- 4 335 567**

(73) Patentinhaber: **ETESIA (Société en Commandite Simple)**
**13 rue de l'Industrie**
**F-67160 WISSEMBOURG(FR)**

(72) Erfinder: **Der Erfinder hat auf seine Nennung verzichtet**

(74) Vertreter: **Nuss, Pierre et al**
**10, rue Jacques Kablé**
**F-67000 Strasbourg(FR)**

Rank Xerox (UK) Business Services

## Beschreibung

Die vorliegende Erfindung betrifft den Bereich der Konstruktion von Rasenmähern, insbesondere von solchen mit grosser Schnittbreite, und hat ein Rasenmähergehäuse mit gegenläufigen, synchronisierten Messern zu Gegenstand.

Gegenwärtig sind die Rasenmäher mit grosser Breite im allgemeinen entweder mit einem einzigen grossen Messer oder mit mehreren, überlappend arbeitenden und in gleicher Richtung drehenden Messern versehen.

Bei der Verwendung eines einzigen grossen Messers ist dieses jedoch für den Benutzer wegen der zum Einsatz kommenden, beträchtlichen kinetischen Energie gefährlich.

Die bekannten Mäher mit mehreren Messern, welche aneinandergereihte oder sich überlappende Schneidbereiche haben können, ermöglichen im allgemeinen kein unmittelbares Aufnehmen des Schnittgutes ohne Zusatzorgane.

Ausserdem bestreichen die Messer, bei den Mähern für aneinandergereihte Schneidbereiche jeweils unabhängig voneinander eine Kreisfläche, deren Durchmesser gleich dem des Schnittmessers ist. Die Achsabstände dieser Messer sind stets grösser als der durch die Endpunkte der Messer bei identischen Messern beschriebene Durchmesser des Kreises. Um einen perfekten Rasenschnitt auf der ganzen Breite von so augestatteten Mähern zu erreichen, sind die Mähbereiche jedes Messers abwechselnd so gegeneinander versetzt, dass die Vorwärtsbewegung des Mähers mehr oder weniger enge Überlappungsbahnen erzeugt. Diese Überlappungsbahnen werden nacheinander durch zwei benachbarte, gegeneinander seitlich und längs versetzte Messer bestrichen.

Schliesslich sind bei diesen bekannten Mähern die Messer identisch und drehen sich alle in gleicher Richtung, ohne dass ein Aufnehmen des Schnittgutes gewährleistet ist.

Die Mäher mit sich überlappenden Schneidbereichen weisen einen für zwei benachbarte Messer gemeinsamen Mähbereich auf, und die Messerdrehung ist so synchronisiert, dass der gemeinsame Bereich abwechselnd von dem einen oder dem anderen der beiden betreffenden Messer bestrichen wird. Diese bekannten Mäher sind im allgemeinen mit identischen, in eine Drehrichtung drehenden Messern ausgestattet, und der Auswurf des Schnittgutes erfolgt seitlich oder nach rückwärts, ohne gleichzeitiges Aufnehmen.

Bei einem anderen, bekannten Mäher dieser Art (US-A-2 071 872) wird die Aufnahme des Schnittgutes unmittelbar sichergestellt. Jedoch bestreichen die Schnittmesser Flächen, die sich mehr oder weniger berühren, was einen ziemlich ungleichmässigen Rasenschnitt in dem Sinn zur Folge hat, dass ein nicht geschnittener Grasstreifen den Zwischenraum zwischen den Mähflächen der beiden benachbarten Messer markiert.

Aus der patentanmeldung US-A-4 335 567 ist auch ein Mäher mit Schneidelementen aus einem Faden bestehend bekannt, bei welchem zwei mit Schneidfäden versehene Scheiben gegenäufig angetrieben werden und sich die Umlaufbahnen der Schneidfäden im Mittelteil überschneiden. Diese Ausführungsform erlaubt jedoch keinen guten Schnitt und keine wirksame Abführung von mittelhohem oder hohem Gras.

Ausserdem beschreibt das Patent GB-A-976 056 ein mit zwei gegenläufig, synchronisierten Messern aufweisendes Mänwerk welches einen zentralen Auswurf des Schnittgutes ermöglicht. Jedoch erlaubt der innere Aufbau dieses Mähwerkes sowie dessen Auswurfkanal keine wirksame Abführung des Schnittgutes, insbesondere bei mittelhohem oder hohem Gras.

Aufgabe der vorliegenden Erfindung ist es, diese Mängel zu beheben.

Sie hat daher, gemäß Anspruch 1, ein Rasenmähergehäuse mit gegenläufigen, synchronisierten Messern, das mit zwei vertikalen Achsen versehen ist, wovon jede ein Schnittmesser trägt und in entgegengesetzter Richtung zueinander dreht, wobei die Messer sich überschneidende Umlaufbahnen mit einem in Umlaufrichtung gesehenen ersten Schnittpunkt beschreiben, ihre Winkelversetzung konstant und ziemlich genau gleich 90°, und die Rotation Ihrer Achsen synchronisiert ist, das Mähergehäuse einen Mantel trägt, der die durch die Endpunkte der Messer über den gesamten Aussenumfaug beschriebenen Umlaufbahnen umgibt, und den durch die Rotation jedes Messers erzeugten Luftstrom bis zum ersten Schnittpunkt der Umlaufbahnen der Messer leitet, von welchem aus sich ein Auswurfkanal nach oben in Richtung der den Umlaufbahnen der beiden Messer gemeinsamen Sehne erstreckt, dadurch gekennzeichnet, dass das Mähergehäuse nebst einem Mantel eine Innenwandung aufweist, die einen Raum über jedem Messer umhüllen, und dass sich der Auswurfkanal ab dem ersten Schnittpunkt bis zur Auswurföffnung durch die sich verändernde Krümmung der Innenwand auf beiden Seiten einer Ebene, die durch die beiden vertikalen Achsen, definiert wird, allmählich erweitert. Die Ahängigen Patentansprüche beziehen sich auf besondere Ausführungsarten der Erfindung.

Die Erfindung wird in der nachfolgenden Beschreibung anhand eines bevorzugten, hiermit jedoch nicht eingeschränkten Ausführungsbeispieles erläutert, und mit Bezug auf die beigefügten Schemazeichnungen erklärt. Hierbei zeigen :

Figur 1 eine Draufsicht des erfindungsgemässen Mähergehäuses ;

Figur 2 eine Seitenansicht des Gehäuses nach Figur 1, und

Figur 3 eine Draufsicht einer Ausführungsvariante der Erfindung.

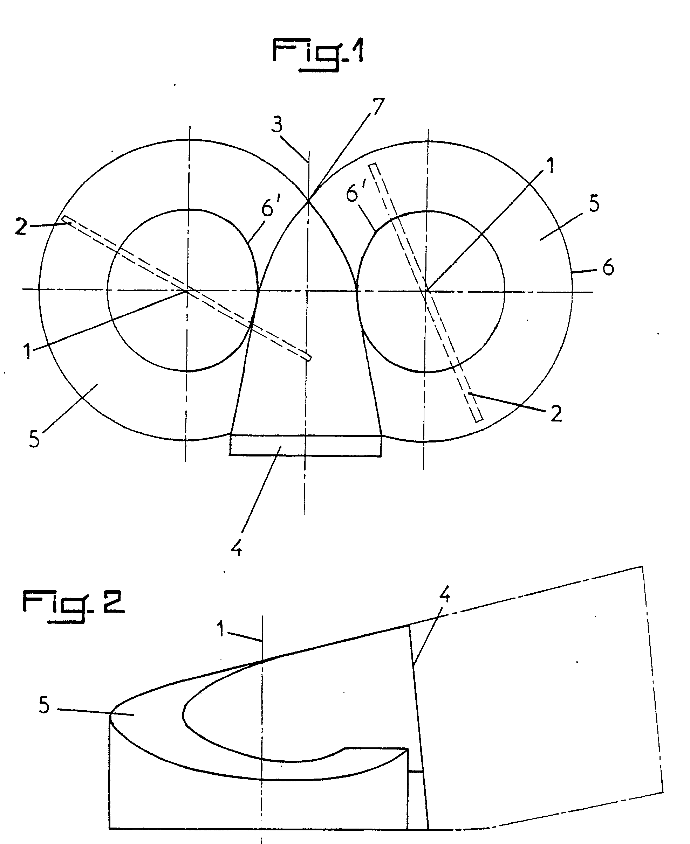

Gemäss der Erfindung, und wie es beispielsweise insbesondere die Figur 1 der beigefügten Zeichnungen zeigt, ist das Rasenmähergehäuse mit gegenläufigen, synchronisierten Messern, das mit zwei vertikalen Achsen (1) versehen ist, wovon jede ein Schnittmesser (2) trägt und in entgegengesetzter Richtung zueinander dreht, wobei die Messer (2) sich überschneidende Umlaufbahnen mit einem in Umlaufrichtung gesehenen ersten Schnittpunkt (7) beschreiben, ihre Winkelversetzung konstant und ziemlich genau gleich 90°, und die Rotation Ihrer Achsen (1) synchronisiert ist, das Mähergehäuse einen Mantel (6) trägt, der die durch die Endpunkte der Messer (2) über den gesamten Aussenumfang beschriebenen Umlaufbahnen umgibt, und den durch die Rotation jedes Messers (2) erzeugten Luftstrom bis zum ersten Schnittpunkt (7) der Umlaufbahnen der Messer leitet, von welchem aus sich ein Auswurfkanal (4) nach oben in Richtung der den Umlaufbahnen der beiden Messer gemeinsamen Sehne (3) erstreckt, dadurch gekennzeichnet, dass das Mähergehäuse nebst einem Mantel (6) eine Innenwandung (6') aufweist, die einen Raum (5) über jedem Messer umhüllen, und dass sich der Auswurfkanal (4) ab dem ersten Schnittpunkt (7) bis zur Auswurföffnung durch die sich verändernde Krümmung der Innenwand (6') auf beiden Seiten einer Ebene, die durch die beiden vertikalen Achsen definiert wird, allmählich erweitert.

Die Innenwandung 6' des jeden Raum 5 oder jedes Spiralgehäuse umgebenden Mantels weist im ebenen Querschnitt eine kreisrunde äussere und eine ovale innere Hälfte auf.

Nach einem weiteren Merkmal der Erfindung weist die innere, ovale Hälfte der Innenwandung 6' des Mantels eine kleine Achse auf, die senkrecht zur Vorwärtsrichtung und zu der den Umlaufbahnen der Messer 2 gemeinsamen Tangente 3 steht, wobei ihre Hauptachse mit der der kreisrunden Hälfte der Wandung 6' vereinigt ist und parallel zu besagter Tangente 3 (Figur 1) verläuft.

Die Verkleinerung des Radius der kleinen Achse im Verhältnis zur Hauptachse ist vorteilhafterweise gleich der Grösse der Überlappung der Messer 2. Diese Unrundheit der Wandung 6' ermöglicht, durch Verkleinerung des Radius der besagten Wandung ab dem Schnittpunkt 7 der Umlaufbahnen der Messer 2, eine regelmässige und fortlaufende Zunahme des Querschnitts des Auswurfkanals 4, derart dass das Gras, -durch die Messer 2 abgeschnitten und durch das Spiralgehäuse 5 geleitet-, in einem ständig grösser werdenden Kanalquerschnitt weiterbefördert wird und so keinesfalls eine Verstopfung dieses letzteren verursacht.

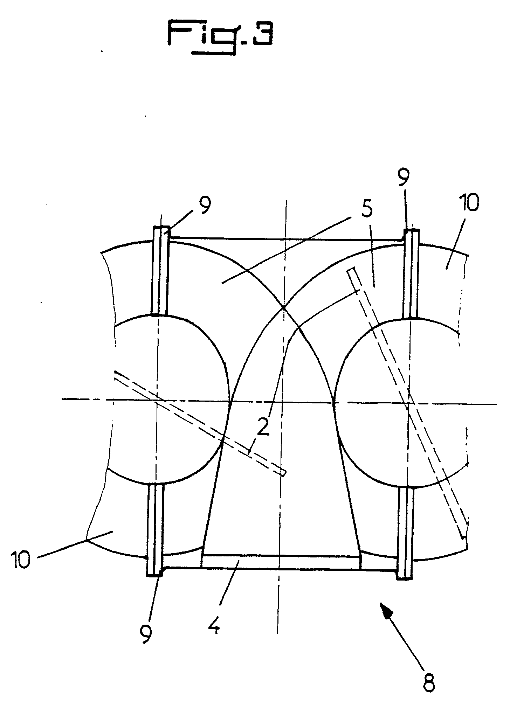

Die Figur 3 stellt eine Ausführungsvariante der Erfindung dar, bei welcher das Mähergehäuse als modulares Gehäuse ausgebildet ist, das aus einem Mittelteil 8, welches aus dem Auswurfkanal 4 und den zwischen den Achsen der Messer 2 eingeschlossenen Teile des Spiralgehäuses im Bereich der besagten Spirale 5 Seitenflansche 9 aufweist, und aus den Halbgehäusen 10 (die auf der Zeichnung teilweise dargestellt sind), besteht, die an den Flanschen 9 des Mittelteils durch Verschraubung befestigt sind. Diese Ausführungsform erlaubt ein problemloses Auswechseln und Ersetzen der Halbgehäuse 10, ohne dass das gesamte Mähergehäuse ersetzt werden muss, da sie Teile darstellen, die, vor allem von der Seite her, Stössen und daher Beschädigung ausgesetzt sind.

Nach einem anderen, erfindungsgemässen Merkmal sind das Mittelteil 8 und die Halbgehäuse 10 vorteilhaft aus verschiedenem Material, d.h. die Halbgehäuse 10 aus stossfestem, und das Mittelteil 8 aus einem weniger widerstandsfähigen Material, hergestellt.

So kann beispielsweise das Mittelteil 8 aus einem steifen Kunststoff bestehen und spritzgegossen oder pressgeformt sein, und die Halbgehäuse 10 können aus gegossenem Aluminium oder auch aus Blech gefertigt sein.

Schliesslich sind die Halbgehäuse 10, nach einem weiteren Merkmal der Erfindung, vorteilhafterweise identisch und entlang ihrer Querachse symmetrisch. Diese Ausführungsform ermöglicht eine Austauschbarkeit der Halbgehäuse 10 von einer Seite des Mittelteils 8 zur anderen durch einfache Verschraubung der Flansche 9.

Die Auslegung eines Mähergehäuses in Form eines Modulargehäuses erlaubt ausserdem eine eventuelle Umgestaltung des besagten Gehäuses durch eine Erweiterung der Breite mit der Möglichkeit der Montage von einem Gehäuseelement, das ein oder mehrere Messer aufweist, an jeder Seite des Mittelteiles 8.

Dank der Erfindung ist es möglich, ein Mähergehäuse herzustellen, das eine gute Abführung des Schnittgutes, ungeachtet der Schnittbedingungen, ermöglicht, und bei der gegebenenfalls ein Element einzeln ersetzt werden kann.

**Ansprüche**

1. Rasenmähergehäuse mit gegenläufigen, synchronisierten Messern, versehen mit zwei vertikalen Achsen (1), wovon jede ein Schnittmesser (2) trägt und in entgegengesetzter Richtung zueinander dreht, wobei die Messer (2) sich überschneidende Umlaufbahnen mit einem in Umlaufrichtung gesehenen ersten Schnittpunkt (7) beschreiben, ihre Winkelversetzung konstant und ziemlich genau gleich 90°, und die Rotation ihrer Achsen (1) synchronisiert ist, das Mähergehäuse einen Mantel (6) trägt, der die durch die Endpunkte der Messer (2) über den gesamten Aussenumfang beschriebenen Umlaufbahnen umgibt, und den durch die Rotation jedes Messers (2) erzeugten Luftstrom bis zum ersten Schnittpunkt (7) der Umlaufbahnen der Messer leitet, von welchem aus sich ein Auswurfkanal (4) nach oben in Richtung der den Umlaufbahnen der beiden Messer gemeinsamen Sehne (3) erstreckt, dadurch gekennzeichnet, dass das Mähergehäuse nebst einem Mantel (6) eine Innenwandung (6') aufweist, die einen Raum (5) über jedem Messer umhüllen, und dass sich der Auswurfkanal (4) ab dem ersten Schnittpunkt (7) bis zur Auswurföffnung durch die sich verändernde Krümmung der Innenwand (6') auf beiden Seiten einer Ebene, die durch die beiden vertikalen Achsen definiert wird, allmählich erweitert.

2. Rasenmähergehäuse nach Anspruch 1, dadurch gekennzeichnet, dass die Innenwandung (6') der Umhüllung jedes Raumes (5) bzw. jeden Spiralgehäuses im ebenen Schnitt eine Kreisrunde äussere und eine ovale innere Hälfte aufweist.

3. Rasenmähergehäuse nach Anspruch 2, dadurch gekennzeichnet, dass die ovale innere Hälfte der Innenwandung (6') der Umhüllung eine kleine Achse aufweist, die senkrecht zur Vorschubrichtung und zu der gemeinsamen Sehne (3) der Messerumlaufbahnen steht, wobei ihre Hauptachse mit der der kreisrunden Hälfte der Wandung (6') vereinigt ist und parallel zu besagter Sehne (3) verläuft.

4. Rasenmähergehäuse nach Anspruch 3, dadurch gekennzeichnet, dass die Verkleinerung des Radius der kleinen Achse im Verhältnis zur Hauptachse ungefähr gleich der Grösse der Überschneidung der Messer (2) ist.

5. Rasenmähergehäuse nach einem der Ansprüche 1 bis 4, dadurch gekennzeichnet, dass es in Form eines modularen Gehäuses aus einem zentralen Teil (8), das den Auswurfkanal (4) und die Partien des Spiralgehäuses (5) zwischen den Achsen der Messer (2) bildet und seitliche Flansche (9) an besagtem Spiralgehäuse (5) aufweist, und aus Halbgehäusen (10), die an den Flanschen (9) des zentralen Teiles (8) durch Verschraubung befestigt sind, besteht.

6. Rasenmähergehäuse nach Anspruch 5, dadurch gekennzeichnet, dass das Mittelteil (8) und die Halbgehäuse (10) vorteilhafterweise aus verschiedenem Material, d.h. die Halbgehäuse (10) aus stossfestem und das Mittelteil (8) aus einem weniger widerstandsfähigem Material hergestellt sind.

7. Rasenmähergehäuse nach einem der Ansprüche 5 und 6, dadurch gekennzeichnet, dass die Halbgehäuse (10) vorteilhafterweise identisch sind und entlang ihrer Querachse eine Symmetrie aufweisen.

## Claims

1. Lawn-mower housing with opposing synchronised blades, provided with two vertical axes (1) each of which carries a cutting blade (2) and rotates in the opposite direction to one another, wherein the blades (2) describe overlapping orbits with a first point of intersection (7), as viewed in the direction of rotation, their angular offset is constant and is fairly accurately equal to 90° and the rotation of their axes (1) is synchronised, the mower housing carries a casing (6) which surrounds the orbits described by the end points of the blades (2) over the entire outer periphery and conveys the airstream produced by the rotation of each blade (2) to the first point of intersection (7) of the blade orbits from which an ejection duct (4) extends upwardly in the direction of the chord (3) common to the orbits of the two blades, characterised in that the mower housing has, in addition to a casing (6), an internal wall (6') which sheathe a chamber (5) above each blade and in that the ejection duct (4) is gradually enlarged from the first point of intersection (7) to the ejection opening owing to the changing curvature of the internal wall (6') on both sides of a plane defined by the two vertical axes.

2. Lawn-mower housing according to claim 1, characterised in that the internal wall (6') of the sheathing of each chamber (5) or of each spiral housing has a circular outer half and an oval inner half in a plane section.

3. Lawn-mower housing according to claim 2, characterised in that the oval inner half of the internal wall (6') of the sheath has a small axis which is perpendicular to the feed direction and to the common chord (3) of the blade orbits, its main axis being combined with that of the circular half of the wall (6') and extending parallel to said chord (3).

4. Lawn-mower housing according to claim 3, characterised in that the reduction of the radius of the small axis in proportion to the main axis is approximately equal to the size of the overlap of the blades (2).

5. Lawn-mower housing according to one of claims 1 to 4, characterised in that, in the form of a modular housing, it consists of a central part (8) which forms the ejection duct (4) and the parts of the spiral housing (5) between the axes of the blades (2) and has lateral flanges (9) on said spiral housing (5), and consists of half housings (10) which are fastened on the flanges (9) of the central part (8) by screwing.

6. Lawn-mower housing according to claim 5, characterised in that the central part (8) and the half housings (10) are advantageously produced from different materials, i.e. the half housing (10) is produced from impact-resistant material and the central part (8) from a less impact-resistant material.

7. Lawn-mower housing according to one of claims 5 and 6, characterised in that the half housings (10) are advantageously identical and have symmetry along their transverse axis.

## Revendications

1. Plateau de coupe à lames contre-rotatives synchronisées, muni de deux axes verticaux (1), portant chacun une lame de coupe (2) et tournant en sens opposés, les lames (2) décrivant des trajectoires qui se recoupent, présentant, dans le sens de rotation, un premier point d'intersection (7), leur décalage angulaire étant constant et sensiblement égal à 90°, et la rotation de leurs axes (1) étant synchronisée, le carter du plateau de coupe comportant une jupe (6), qui enveloppe les trajectoires décrites par les extrémités des lames (2) sur l'ensemble du périmètre extérieur, et guidant le flux d'air engendré par la rotation de chaque lame (2) jusqu'au premier point d'intersection (7) des trajectoires des lames, à partir duquel un canal d'éjection (4) s'étend vers le haut dans la direction de la tangente (3) commune aux trajectoires des deux lames, caractérisé en ce que le plateau de coupe, en dehors d'une jupe (6), présente une paroi intérieure (6'), enveloppant un espace (5) au-dessus de chaque lame, et en ce que le canal d'éjection (4) s'élargit progressivement à partir du premier point d'intersection (7) des lames, par variation de la courbure de la paroi intérieure (6') des deux côtés d'un plan défini par les deux axes verticaux, jusqu'à l'orifice d'éjection.

2. Plateau de coupe, suivant la revendication 1, caractérisé en ce que la paroi intérieure (6') de la jupe enveloppant chaque espace (5), ou volute, présente, en section plane, une moitié extérieure circulaire et une moitié intérieure ovale.

3. Plateau de coupe, suivant la revendication 2, caractérisé en ce que la moitié intérieure ovale de la paroi intérieure (6') de la jupe présente un petit axe perpendiculaire au sens d'avancement et à la tangente (3) commune aux trajectoires des lames (2), son grand axe étant confondu avec celui de la moitié circulaire de la paroi (6') et parallèle à ladite tangente (3).

4. Plateau de coupe, suivant la revendication 3, caractérisé en ce que la réduction du rayon du petit axe par rapport aux grand axe est avantageusement environ égale à la valeur du recouvrement des lames (2).

5. Plateau de coupe, suivant l'une quelconque des revendications 1 à 4, caractérisé en ce qu'il est sous forme d'un carter modulaire constitué par une partie centrale (8) enveloppant le canal d'éjection (4) et les parties de volutes (5) comprises entre les axes des lames (2), et présentant, au niveau desdites volutes (5), des flasques latéraux (9), et par des demi-volutes (10) fixées sur les flasques (9) de la partie centrale (8) par vissage ou par boulonnage.

6. Plateau de coupe, suivant la revendication 5, caractérisé en ce que la partie centrale (8) et les demi-volutes (10) sont avantageusement réalisées en des matériaux différents, à savoir, les demi-volutes (10) en un matériau résistant aux chocs, et la partie centrale (8) en un matériau de plus faible résistance.

7. Plateau de coupe, suivant l'une quelconque des revendications 5 et 6, caractérisé en ce que les demi-volutes (10) sont avantageusement identiques et présentent une symétrie suivant leur axe transversal.

# Fig.1

# Fig.2

# Fig.3